(19) Europäisches Patentamt
European Patent Office
Office européen des brevets

(11) **EP 4 597 935 A2**

(12) **EUROPEAN PATENT APPLICATION**

(43) Date of publication:
06.08.2025 Bulletin 2025/32

(21) Application number: 25152403.9

(22) Date of filing: 17.01.2025

(51) International Patent Classification (IPC):
*H04L 25/02* (2006.01)   *G06N 3/02* (2006.01)
*G06N 3/084* (2023.01)   *H04L 1/00* (2006.01)
*H04L 27/34* (2006.01)

(52) Cooperative Patent Classification (CPC):
H04L 25/0254; G06N 3/02; G06N 3/084;
H04L 1/0003; H04L 25/023; H04L 27/3405

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.01.2024 FI 20245089

(71) Applicant: Nokia Solutions and Networks Oy
02610 Espoo (FI)

(72) Inventors:
• REZAIE, Sajad
  Aalborg (DK)
• BARBU, Oana-Elena
  Aalborg (DK)
• VEJLGAARD, Benny
  Gistrup (DK)

(74) Representative: Nokia EPO representatives
Nokia Technologies Oy
Karakaari 7
02610 Espoo (FI)

(54) **COMMUNICATION SYSTEMS**

(57)   An apparatus, method and computer program is described comprising: transmitting signals to a node of a mobile communication system using a device having one or more non-trainable transmitter modules and one or more trainable transmitter modules, wherein said one or more trainable transmitter modules comprise a trainable modulator configured to generate complex symbols from a learned constellation.

Fig. 3

EP 4 597 935 A2

## Description

## Field

Example embodiments may relate to devices, systems, methods and/or computer programs for use in communication systems.

## Background

Transceivers having trainable modules are promising candidates for communication between user devices and mobile communication nodes, such as UEs and gNBs. However, they can suffer from shortcomings which may hinder their standardization and eventual large-scale adoption. There remains a need for further development in this field.

## Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described a device for transmitting signals to a node of a mobile communication system (e.g. a user equipment or some other user device transmitter signals to a gNB or some other node), the device comprising one or more non-trainable transmitter modules and one or more trainable transmitter modules, wherein said one or more trainable transmitter modules comprise a trainable modulator configured to generate complex symbols from a learned constellation. The learned constellation may an outcome of a training procedure. The learned constellation could, for example, be as a result of training at said device or joint training at said device and said node. Alternatively, the training could take place elsewhere.

The one or more trainable transmitter modules may comprise a trainable pre-distorter.

In some example embodiments, the device further comprises means for providing a capability report to the node in response to a request from said node, said capability report including at least one of characteristics or constraints of one or more of said trainable transmitter modules. Based on the capability report, the node may, for example, instruct the device to use either a learnable transmitter/constellation or a legacy counterpart.

The device may further comprise means for receiving backpropagation gradients from the node for use in training one or more of said trainable modules (e.g. for updating the learned constellation). In some example embodiments, the device further comprises means for updating the constellation of the trainable modulator based, at least in part, on said backpropagation gradients. The device may further comprise means for forward propagating an updated learned constellation to said node. An update rate for training a trainable constellation may be provided. Alternatively, or in addition, aperiodic updating may be provided.

The device may further comprise means for updating one or more of said trainable transmitter modules (e.g. by generated an updated learned constellation) and means for sharing a device dataset describing functionality of one or more of said updated trainable transmitter modules to said node. The dataset may, for example, include inputs and output of the modulator (rather than, for example, details of an updated learned constellation).

The device may further comprise means for receiving a node dataset describing functionality of one or more updated trainable receiver modules of said node. The node dataset may provide details of inputs and outputs of one or more trained modules at the receiver.

The device may further comprise means for providing an updated constellation (e.g. an updated learned constellation) to the node during an inference mode of operation. The updated constellation may be provided in response to a request (e.g. from the node referred to above). Alternatively, or in addition, the updated constellation may be provided periodically or aperiodically. An arrangement for controlling a period of provided the updated constellation may be provided.

The device may further comprise means for receiving channel correlation information from the node during the inference mode of operation.

The device may further comprise means for receiving a pilot configuration from said node.

According to a second aspect, there is provided a node for receiving signals from each of a plurality of devices of a mobile communication system, the node comprising one or more non-trainable receiver modules and one or more trainable receiver modules, wherein the one or more trainable receiver modules comprise at least one of: means for estimating a channel response for transmissions from each respective device and said node; or means for detecting encoded data symbols received from one or more of said devices over the channel based, at least in part, on device-specific constellation information and device-specific channel information. The plurality of devices may include devices having one or more trainable transmitter modules as discussed above. Alternatively, or in addition, the plurality of devices may include devices having legacy transmitter modules. In this way, the node may be device-agnostic.

At least some of said plurality of devices providing the signals received at said node may include a trainable modulator configured to generate complex symbols from a learned constellation.

The one or more trainable receiver modules may comprise a single module for estimating said channel response and for detecting said encoded data symbols. Alternatively, separate modules may be provided for estimating the channel response and for detecting said encoded data symbols.

In some example embodiments, the means for estimating said channel response comprises a trainable generic channel estimation module.

The node may further comprise means for defining a variable pilot configuration for transmission by each device for use by said means for estimating the respective channel responses.

The node may further comprise means for defining constraints for training one or more trainable modules of one or more of said devices.

The node may further comprise means for receiving a capability report from one or more of said devices in response to a request from said node, wherein each capability report includes at least one of characteristics or constraints of trainable transmitter modules of the respective device. Furthermore, the node may comprise means for providing backpropagation gradients to one or more of said devices for use in training trainable modules of the respective device(s).

The node may further comprise means for receiving an updated constellation from one or more of said devices.

The node may further comprise means for defining an update rate for updating a constellation of a trainable modulator of one or more of said devices.

The node may further comprise means for receiving, from one or more of said devices, a device dataset describing functionality of one or more updated trainable transmitter modules of the respective device.

According to a third aspect, there is provided a method comprising: transmitting signals to a node (e.g. a gNB) of a mobile communication system using a device having one or more non-trainable transmitter modules and one or more trainable transmitter modules, wherein said one or more trainable transmitter modules comprise a trainable modulator configured to generate complex symbols from a learned constellation. The one or more trainable transmitter modules may comprise a trainable pre-distorter.

The method may comprise providing a capability report to the node in response to a request from said node, said capability report including at least one of characteristics or constraints of one or more of said trainable transmitter modules.

The method may further comprise receiving backpropagation gradients from the node for use in training one or more of said trainable modules (e.g. for updating the learned constellation). Alternatively, or in addition, the method may comprise updating the constellation of the trainable modulator based, at least in part, on said backpropagation gradients.

The method may further comprise forward propagating an updated learned constellation to said node. An update rate for training a trainable constellation may be provided. Alternatively, or in addition, aperiodic updating may be provided.

The method may further comprise updating one or more of said trainable transmitter modules. The method may comprise sharing a device dataset describing functionality of one or more of said updated trainable transmitter modules to said node. The dataset may, for example, include inputs and output of the modulator (rather than, for example, details of the constellation).

The method may further comprise receiving a node dataset describing functionality of one or more updated trainable receiver modules of said node.

The method may further comprise providing an updated constellation to the node during an inference mode of operation. The updated constellation may be provided in response to a request (e.g. from the node referred to above). Alternatively, or in addition, the updated constellation may be provided periodically or aperiodically. An arrangement for controlling a period of provided the updated constellation may be provided.

The method may further comprise receiving channel correlation information from the node during the inference mode of operation.

The method further comprise means for receiving a pilot configuration from said node.

According to a fourth aspect, there is provided a method comprising: receiving, at a node (e.g. a gNB) of a mobile communication system, signals from each of a plurality of devices (e.g. UEs) of the mobile communication system, the node comprising one or more non-trainable receiver modules and one or more trainable receiver modules, wherein the one or more trainable receiver modules are configured to: estimate a channel response for transmissions from each respective device and said node; and/or detect encoded data symbols received from one or more of said devices over the channel based, at least in part, on device-specific constellation information and device-specific channel information. The plurality of devices may include devices having one or more trainable transmitter modules as discussed above. Alternatively, or in addition, the plurality of devices may include devices having legacy transmitter modules. In this way, the node may be device-agnostic.

In some example embodiments, a trainable generic channel estimation module is provided for estimating said channel response.

The method may comprise defining a variable pilot configuration for transmission by each device for use by said means for estimating the respective channel responses.

The method may further comprise defining constraints for training one or more trainable modules of one or more of said devices.

The method may further comprise receiving a capability report from one or more of said devices in response to a request from said node, wherein each capability report includes at least one of characteristics or constraints of trainable transmitter modules of the respective device. Furthermore, the node may comprise means for providing backpropagation gradients to one or more of said devices for use in training trainable modules of the respective device(s).

The method may further comprise providing backpropagation gradients to one or more of said devices for use in training trainable modules of the respective device(s).

The method may further comprise receiving an updated constellation from one or more of said devices.

The method may further comprise defining an update rate for updating a constellation of a trainable modulator of one or more of said devices.

The method may further comprise receiving, from one or more of said devices, a device dataset describing functionality of one or more updated trainable transmitter modules of the respective device.

According to a fifth aspect, there is provided a computer-readable instructions which, when executed by a computing apparatus, cause the computing apparatus to perform (at least) any method as described herein (including the methods of the third and fourth aspects described above).

According to a sixth aspect, there is provided a computer-readable medium (such as a non-transitory computer-readable medium) comprising program instructions stored thereon for performing (at least) any method as described herein (including the methods of the third and fourth aspects described above).

According to a seventh aspect, there is provide an apparatus comprising: at least one processor; and at least one memory including computer program code which, when executed by the at least one processor, causes the apparatus to perform (at least) any method as described herein (including the methods of the third and fourth aspects described above).

According to an eighth aspect, there is provided a computer program comprising instructions which, when executed by an apparatus, cause the apparatus to: transmit signals to a node (e.g. a gNB) of a mobile communication system using a device having one or more non-trainable transmitter modules and one or more trainable transmitter modules, wherein said one or more trainable transmitter modules comprise a trainable modulator configured to generate complex symbols from a learned constellation. The one or more trainable transmitter modules may comprise a trainable pre-distorter.

According to a ninth aspect, there is provided a computer program comprising instructions which, when executed by an apparatus, cause the apparatus to: receive, at a node (e.g. a gNB) of a mobile communication system, signals from each of a plurality of devices (e.g. UEs) of the mobile communication system, the node comprising one or more non-trainable receiver modules and one or more trainable receiver modules, wherein the one or more trainable receiver modules are configured to: estimate a channel response for transmissions from each respective device and said node; and/or detect encoded data symbols received from one or more of said devices over the channel based, at least in part, on device-specific constellation information and device-specific channel information. The plurality of devices may include devices having one or more trainable transmitter modules as discussed above. Alternatively, or in addition, the plurality of devices may include devices having legacy transmitter modules. In this way, the node may be device-agnostic.

According to a tenth aspect, there is provided an apparatus comprising (at least) a receiver (or some other means) for receiving, at a node (e.g. a gNB) of a mobile communication system, signals from each of a plurality of devices (e.g. UEs) of the mobile communication system, the node comprising one or more non-trainable receiver modules and one or more trainable receiver modules, wherein the one or more trainable receiver modules further comprise: a channel estimator (or some other means) for estimating a channel response for transmissions from each respective device and said node; and/or a detector (or some other means) for detecting encoded data symbols received from one or more of said devices over the channel based, at least in part, on device-specific constellation information and device-specific channel information.

## Brief Description of the Drawings

Example embodiments will now be described by way of non-limiting example, with reference to the accompanying drawings, in which:

FIG. 1 is a block diagram showing a system in accordance with an example embodiment;
FIG. 2 is a block diagram showing a system in accordance with an example embodiment;
FIG. 3 is a block diagram showing a system in accordance with an example embodiment;
FIG. 4 is a block diagram showing a transmitter in accordance with an example embodiment;
FIG. 5 is a block diagram showing a receiver in accordance with an example embodiment;
FIG. 6 is a flow chart showing an algorithm in accordance with an example embodiment;
FIG. 7 shows a message flow sequence in accordance with an example embodiment;
FIG. 8 is a flow chart showing an algorithm in accordance with an example embodiment;
FIG. 9 is a flow chart showing an algorithm in accordance with an example embodiment;
FIG. 10 shows a message flow sequence in accordance with an example embodiment;
FIG. 11 shows a message flow sequence in accordance with an example embodiment;
FIG. 12 is a block diagram showing a system in accordance with an example embodiment;
FIG. 13 is a block diagram showing a system including an example pilot scheme for the generic channel estimation module of FIG. 12;
FIGS. 14 to 16 show the use of a generic channel estimate module for iterative channel estimation;

FIG. 17 is a block diagram of a system in accordance with an example embodiment;

FIG. 18 is a block diagram of components of a system in accordance with an example embodiment; and

FIG. 19 shows an example of tangible media for storing computer-readable code which when run by a computer may perform methods according to example embodiments described above.

**Detailed Description**

The scope of protection sought for various embodiments of the disclosure is set out by the independent claims. The embodiments and features, if any, described in the specification that do not fall under the scope of the independent claims are to be interpreted as examples useful for understanding various embodiments of the disclosure.

In the description and drawings, like reference numerals refer to like elements throughout.

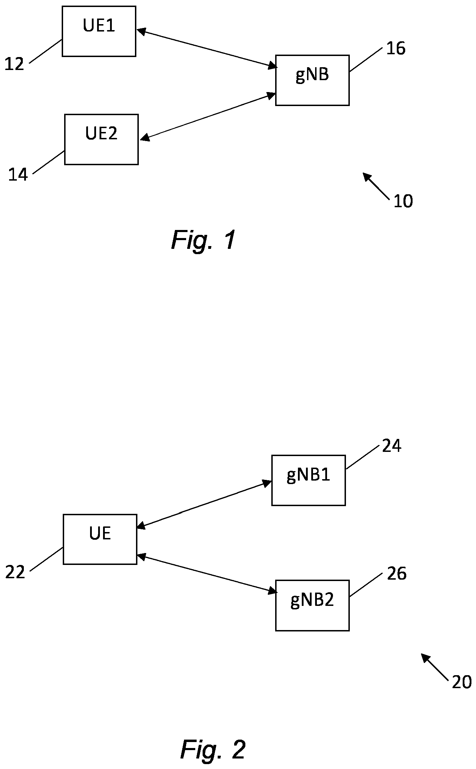

FIG. 1 is a block diagram showing a system, indicated generally by the reference numeral 10, in accordance with an example embodiment. The system 10 comprises a first user equipment (UE) 12 (or some other user device), a second user equipment (UE) 14 (or some other user device) and a gNB 16 (or some other mobile communication system node). The first and second UEs are both in two-way communication with the gNB 16.

In order for data to be transmitted from one of the UEs to the gNB 16, the respective UE encodes the data for transmission and transmits that data over a wireless channel between the UE and the gNB. The signal at the gNB is then decoded. The decoding includes taking account of the encoding carried out at the respective UE, and the effects of the channel.

The first UE 12 and the second UE 14 may be provided by different vendors. Algorithms (such as data encoding algorithms) implemented by different vendors may be different. It can be challenging for the gNB 16 to communicate with UEs of multiple different vendors.

FIG. 2 is a block diagram showing a system, indicated generally by the reference numeral 20, in accordance with an example embodiment. The system 20 comprises a user equipment (UE) 22 (or some other user device), a first gNB 24 (or some other mobile communication system node) and a second gNB 26 (or some other mobile communication system node). Two way communication between the UE 22 and each of the first and second gNBs 24, 26 is possible, as indicated by the arrows in the system 20.

In order for data to be transmitted from the UE 22 and one of the gNBs 24, 26, the UE encodes the data for transmission and transmits that data over a wireless channel between the UE and the respective gNB. The signal at the respective gNB is then decoded. The decoding includes taking account of the encoding carried out at the respective UE, and the effects of the channel.

The first gNB 24 and the second gNB 26 may be provided by different vendors. The requirements of the different vendors may be different. It can be challenging for the UE 22 to be able to communicate with gNBs of multiple different vendors.

Deep MIMO transceivers are promising candidates for communications between user devices and mobile communication nodes, such as the UEs and gNBs described above. However, such transceivers can suffer from shortcomings related to either generalization capability or computational complexity. These shortcomings may hinder their standardization and eventual large-scale adoption.

For example, learned parameters sometimes do not generalize well over diverse environments e.g., different mobility regimes, channel models, SINR conditions etc. Obtaining universal transceivers which are UE-agnostic (such as in the system 10 where the UEs may be different vendors) or gNB-agnostic (such as in the system 20 where the gNBs may be from different providers) is also challenging.

Moreover, the complexity of such solutions can become prohibitive, particularly for larger configurations (e.g. large MIMO configurations).

Deep transceiver training may also need to address the challenge of unknown and potentially undifferentiable real-life channel response. Such training may require large amounts of known data to be sent over the wireless channel, which comes with costs, such as reduced spectral efficiency.

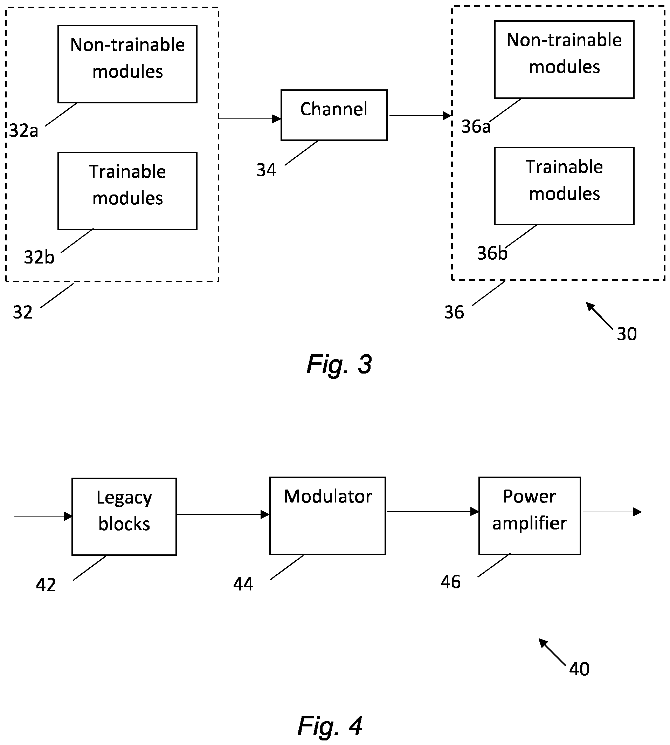

FIG. 3 is a block diagram showing a system in accordance with an example embodiment. The system 30 comprising a transmitter 32 (which may be part of the UEs 12, 14 or 22 described above) and a receiver 36 (which may form part of the gNBs 16, 24 and 26 described above). The transmitter 32 and receiver 36 may communicate over a channel 34 (e.g. a channel of a mobile communication system).

The transmitter 32 comprising one or more non-trainable modules 32a (e.g. non-trainable OFDM legacy transmission modules) and one or more trainable modules 32b (e.g. a trainable deep transmitter). The trainable module(s) may include a modulator for generating complex symbols from a learned constellation (e.g. a constellation learned as part of a training process). In other words, the modulation block of a known OFDM TX chain may be replaced by a deep neural network alternative.

The receiver 36 comprises one or more non-trainable modules 36a (e.g. non-trainable OFDM legacy reception modules) and one or more trainable modules 36b (e.g. a trainable deep receiver). The trainable module(s) may, for example, seek to estimate the channel response and demodulate the data symbols generated by either a trained UL transmitter or a legacy transmitter. The receiver 36 may, for example, be a MIMO UL receiver (e.g. a single user MIMO (SU-MIMO receiver or a multi-user MIMO (MU-MIMO) receiver).

The receiver 36 may be trained to be both:

- Agnostic to the UE vendor. For example, the receiver may be able to demodulate UL data regardless of the UL deep transmitter architecture, output type, and considered pilot pattern (including pilot-less scheme); and
- Backwards compatible towards legacy UEs. For example, the receiver may be able to demodulate data symbols from standard QAM constellations, or other known constellations.

As discussed in detail below, to achieve the abovementioned agnosticism, some example embodiments comprise a generic channel estimator (CE) and a UE-specific detector, where the channel estimator combines the following:

- The handling of pilot resource elements (REs) with variable input shape and size;
- Using assistance information relating to the correlation of the channel in time, frequency and/or space domains and about the constellation of each served UE; and/or
- A progressive channel reconstruction approach, where the channel is learned by progressively expanding the RE neighborhood around the pilot REs.

In addition, in some example embodiments assistance information exchange between the transmitter and receiver is defined. For example, aspects such as lightweight signaling (i.e., not sharing the full covariance matrix) and utilizing time and/or frequency and/or spatial channel correlation function may be provided.

FIG. 4 is a block diagram showing a transmitter, indicated generally by the reference numeral 40, in accordance with an example embodiment. The transmitter 40 comprises legacy blocks 42, a modulator 44 and a power amplifier 46. The transmitter 40 is an example implementation of the transmitter 32 described above.

The legacy blocks 42 may include modules such as a channel encoder and an interleaver. Some or all of these modules may non-trainable (any may therefore be some or all of the non-trainable modules 32a described above).

The modulator 44 may be a trainable modulator configured to generate complex symbols from a learned constellation (and may therefore be one or all of the trainable modules 32b described above).

The power amplifier may comprising a pre-distorter. In some example embodiments, the pre-distorter is non-trainable, but in other example embodiments, the pre-distorter is trainable.

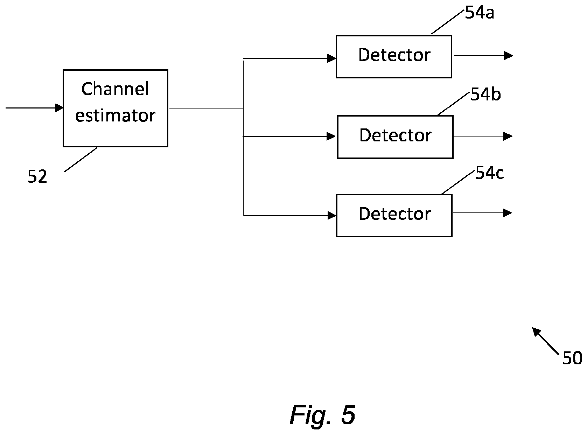

FIG. 5 is a block diagram showing a receiver, indicated generally by the reference numeral 50, in accordance with an example embodiment. The receiver 50 comprises a channel estimator 52 and a plurality of detectors 54a, 54b and 54c (although three detectors are shown, the receiver 50 may include more or fewer detectors). The receiver 50 is an example implementation of the receiver 36 described above.

The channel estimator 52 is configured to estimate a channel response for transmissions from each of one or more user devices (e.g. as transmitted by instances of the transmitter 32 or 40, for example over the channel 34). The channel estimator 52 may be a trainable (and may therefore be one or all of the trainable modules 36b described above). In some other example embodiments, the channel estimator is non-trainable. As discussed in detail below, the channel estimator 52 may comprise a trainable generic channel estimation module.

The detectors 54 are configured to detect encoded data symbols received from respective transmitter. The decoding may be based on device-specific constellation information and device-specific channel information. The detectors 54 may be a trainable (and may therefore be one or all of the trainable modules 36b described above).

The data symbols decoded by the detector 54 may be encoded based on a learned constellation, as discussed above. This not essential. For example, the receiver 50 can also operate with legacy devices. Indeed, in some example embodiments, a receiving node (such as a gNB) may define whether legacy or trained constellations are used.

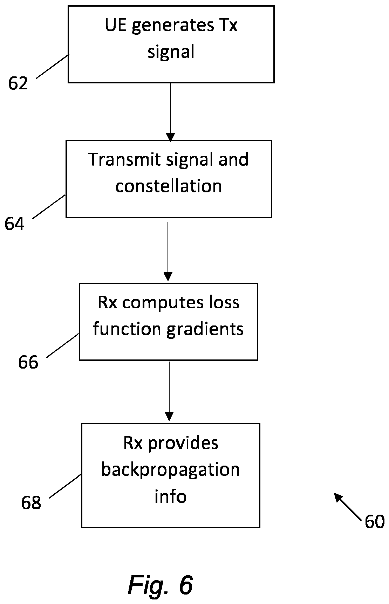

FIG. 6 is a flow chart showing an algorithm, indicated generally by the reference numeral 60, in accordance with an example embodiment. The algorithm 60 may be implemented by the system 30 described above (which may incorporate some or all of the features of the transmitter 40 and receiver 50 described above)

The algorithm 60 starts at operation 62, where a user device (e.g. the transmitter 30) generates a signal for transmission (Tx). At operation 64, the signal for transmission is transmitted to a receiver (e.g. a node of a mobile communication system), such as the receiver 36 or 50. As discussed above, the transmitter may include one or more non-trainable transmitter modules and one or more trainable transmitter modules, wherein said one or more trainable transmitter modules comprise a trainable modulator configured to generate complex symbols from a learned constellation.

As part of the operation 64, information relating to the learned constellation is provided to the receiver. The information relating to the learned constellation may be provided over the air (e.g. using channel 34). In some alternative embodiments, the information relating to the learned constellation may be provided in some other way (e.g. offline).

The transmitted signals are received at the receiver (typically together with similar transmission from other user devices). As discussed above, the receiver may estimate a channel response (e.g. using channel estimator 52) for transmissions from each respective device and said node and detect (e.g. using detectors 54) encoded data symbols received from one or more of said devices over the channel based, at least in part, on device-specific constellation information and device-specific channel information.

At operation 66, the receiver computes loss function gradients for use in training the trainable modules of the transmitter (as discussed in detail below).

At operation 68, backpropagation gradients are provided by the receiver to the respective transmitter for use in training one or more of said trainable modules. The transmitter may then update the constellation of the trainable modulator based, at least in part, on said backpropagation gradients.

In example one implementation, training may be implemented using K UEs which each send a UE-specific bit vector $u_k$ which is passed through a legacy transmitter (which may be one of the legacy blocks 42 of the transmitter 40), then through a second learnable transmitter (which may be the modulator 44 of the transmitter 40), to yield a wave $s_k(t)$ which is sent over the propagation channel with response $h_k(t)$ to the receiver which observes a signal $y(t) = \Sigma_{k\,=\,1:K}(h_k{}^*s_k)(t)$. The received signal is passed through a learnable inner receiver (e.g. the channel estimator 52 and detectors 54 of the receiver 50) which performs channel estimation, equalization, and detection, and then through the legacy outer receiver which computes a bit vector estimate per $\hat{u}_k$ each UE. Note that some of the UEs may replace their learnable second transmitter by a legacy second transmitter.

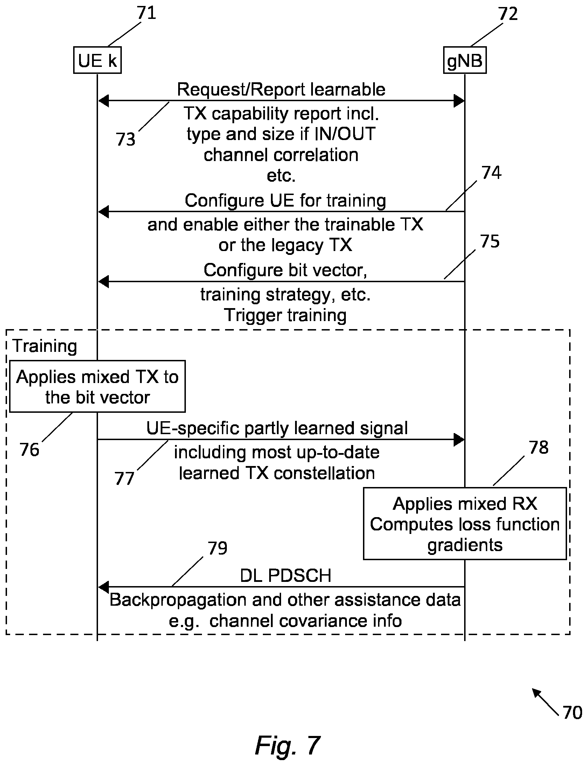

FIG. 7 shows a message flow sequence, indicated generally by the reference numeral 70, in accordance with an example embodiment. The sequence 70 may be used to configure the K UEs transmission of $u_k$. The particular message sequence 70 shows messages between a Kth UE 71 of the K UEs and a gNB 72 that is in communication with the UEs.

The sequence 70 is an example of a joint training procedure involving a UE and a gNB in which trainable-related data is provided from the UE to the gNB and also from the gNB to the UE.

In step 73 of the algorithm 70, the gNB 72 requests that the UE 71 (and optionally all of the other UEs) provides a capability report regarding the characteristics and/or constraints of trainable modules of the kth transmitter (expressed as $f_{learn,k}$). Such characteristics or constraints may include:

- size and type of input and/or output;
- assistance information such as channel correlation information in time/frequency/space; and
- minimum and maximum frequency of training, etc.

Based on the capability report, the gNB 72 may determine whether a learnable transmitter or a legacy transmitter should be used by respective UEs (including the Kth UE 71).

In step 74, the gNB 72 configures the Kth UE 71 (and optionally other UEs) to use either the learnable transmitter or the legacy counterpart. In case of the former, the gNB 72 may request whether the learnable transmitter should also be re-trained or can be used as deployed. In case of the later (in which the legacy transmitter is selected for the respective UE), the gNB may configure the UE with the desired transmit modulation and coding. Other training parameters may also be provided, such as defining an updated rate for updating trainable modules of the transmitter (such as a constellation of a trainable modulator of the transmitter).

In step 75, the gNB 72 configures the bit vector to be sent by each of the selected UEs (e.g. the Kth UE 71). The gNB 72 triggers the joint training, using a common loss function computed at the gNB side and configures the two channels for:

- Backpropagating the gradients from the gNB 72 to the UE 71. For this, a DL PDSCH message may be used; and
- Forward propagating the most up-to-date learned constellation of the UE 71. For this, an UL PDSCH message may be used.

The gNB 72 triggers the training, including duration, periodicity, and feedback channels for exchanging training-relevant data.

Each configured UE (including the UE 71) applies the above configuration, and the training starts - as indicated by the dotted box in FIG. 7.

The training starts at operation 76, where a trained or partly trained transmitter algorithm is applied to a bit vector (note that the bit vector may be defined by the gNB, as described above). The UE-specific output of the (partly) trained transmitter is provided to the gNB 72 in operation 77. As part of the operation 77, the most up-to-date learned transmitter constellation is provided (so that the gNB can decode the transmitter message).

At operation 78, the gNB computes loss function gradients (as discussed in detail below).

At operation 79, the gNB 72 provides backpropagation gradients to the respective UEs (including the Kth UE 71) for use in training trainable modules of the respective UEs.

In some example embodiments, transmitters (e.g. UEs) and receivers (e.g. gNBs) are trained separately. In one example embodiment, a transmitter and a receiver may share datasets (e.g. inputs and outputs) for their respective learnable transmitter modules and respective receiver modules. Typically, weights of trained models are not shared. Alternatively, a transmitter (e.g. a UE in UL and a gNB in DL) may share the bits and the corresponding modulated signals with the other entity. The sharing may happen over the air interface PD/USCH. The transmitter and receiver may need to agree which side is trained first, and thus which shares data first. This agreement may, for example, be realized prior to triggering the training, on a periodic manner, using RRC IE message for the handshake.

In addition to the training dataset, channel covariance information may be provided by one side to the other and/or a learned constellation may be provided by the transmitter (e.g. a UE) to the receiver (e.g. a gNB).

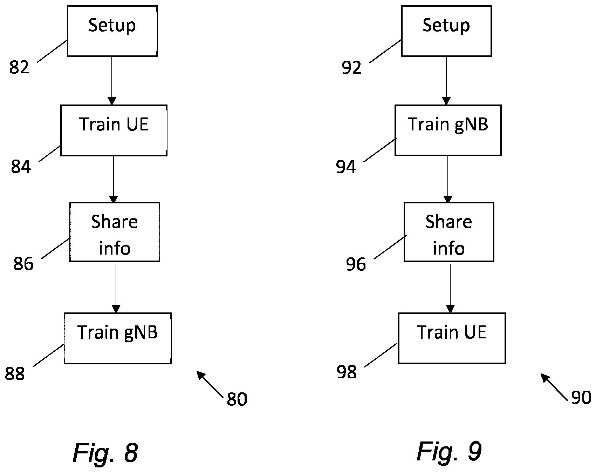

FIG. 8 is a flow chart showing an algorithm, indicated generally by the reference numeral 80, in accordance with an example embodiment. In the algorithm 80, a UE is trained first and a gNB trained subsequently.

The algorithm 80 starts at operation 82, where a setup procedure is implemented. The setup procedure may, for example, define the order in which the UE and gNB are trained.

At operation 84, the UE is trained. Training the UE may include updating one or more trainable transmitter modules of the UE.

At operation 86, information, such as a device dataset describing functionality of the updated trainable transmitter module(s) is shared with the gNB. In some example embodiments, the dataset includes inputs and outputs of the trained modulator (rather than, for example details of the constellation or weight of trained models).

At operation 88, the gNB is trained.

FIG. 9 is a flow chart showing an algorithm, indicated generally by the reference numeral 90, in accordance with an example embodiment. The algorithm 90 differs from the algorithm 80 in that the gNB is trained before the UE.

The algorithm 90 starts at operation 92, where a setup procedure is implemented. As with the operation 82 described above, the setup procedure may, for example, define the order in which the UE and gNB are trained.

At operation 94, the gNB is trained. Training the gNB may include updating one or more trainable receiver modules of the gNB.

At operation 96, information, such as a node dataset describing functionality of the updated trainable receiver module(s) is shared with the UE. In some example embodiments, the data inputs input and outputs of channel estimator or detector modules may be shared with the UE.

At operation 98, the UE is trained.

It should be noted that whilst the algorithms 80 and 90 describe training of UEs and gNBs, the principles can be applied to other devices and nodes of a mobile communication system.

After training is completed (using any of the algorithms described above), one side (e.g. a UE or a gNB) may seek assistance from the other side when running the learned models (e.g. during an inference procedure in which the learned models are used). As discussed below, the side providing the assistance (e.g. channel correlation information and/or the learned constellation) may do so using a message, such as an RRC information element (IE) or a MAC CE.

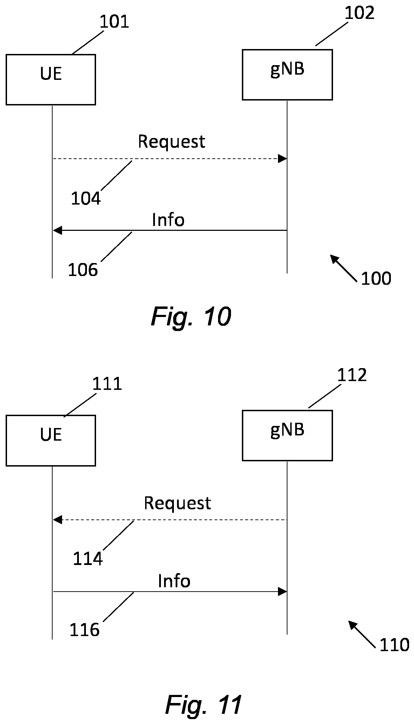

FIG. 10 shows a message flow sequence, indicated generally by the reference numeral 100, in accordance with an example embodiment. The algorithm starts at operation 104, where a request for further information is sent by a UE 101 to a gNB 102. In response, information (such as channel correlation information) is provided by the gNB 102 to the UE 101.

FIG. 11 shows a message flow sequence, indicated generally by the reference numeral 110, in accordance with an example embodiment. The algorithm 110 starts at operation 114, where a request for further information is sent by a gNB 112 to a UE 111. In response, information (such as an updated constellation) is provided by the UE 111 to the gNB 112.

It should be noted that whilst the algorithms 110 and 120 describe the sharing of information between UEs and gNBs, the principles can be applied to other devices and nodes of a mobile communication system.

Moreover, the operations 104 and 114 may be omitted in some example embodiments, such that the information is provided without a request being made.

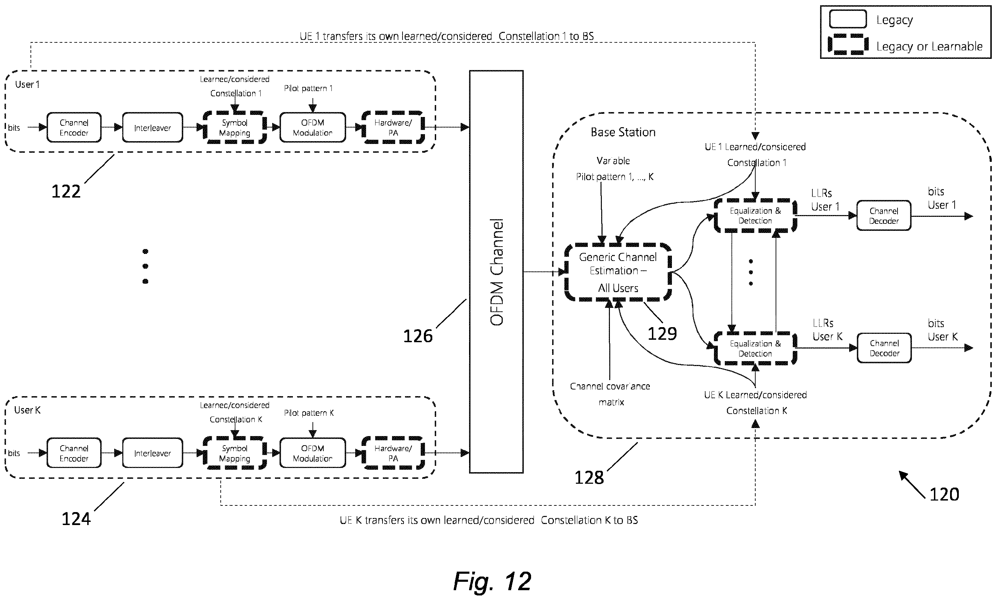

FIG. 12 is a block diagram showing a system, indicated generally by the reference numeral 120, in accordance with an example embodiment.

In the system 120, a base station 128 serves multiple user devices (a first user device 122 and a Kth user device 124 are shown in FIG. 12). The user devices transmit to the base station 128 over a channel 126. The system 120 is therefore similar to the system 30 described above, in which each of the K user devices 122, 124 are instances of the transmitter 32, the channel 126 is an example of the channel 34 and the base station 128 is an example of the receiver 36.

The user devices 122, 124 each include non-trainable modules (a channel encoder, interleaver an OFDM modulator) and trainable modules (symbol mapping and power amplifier). Note that, in some example embodiments, the power amplifier is not trainable. Similarly, the base station 128 includes trainable modules (a channel estimator 129 and equalisation/detection modules) and non-trainable modules. Again, in some example embodiments, different receiver modules may be trainable and non-trainable. Thus, the user devices 122, 124 are similar to the transmitter 40 described above and the base station 128 is similar to the receiver 50 described above.

In the system 120, the base station (e.g. a gNB) serves multiple UEs that may each have different constellations and specific hardware impairments. In addition, based on the experienced channel conditions by each UE, different pilot patterns can be assigned to the UEs. In the system 120, a generic channel estimation module 129 that is trained/designed to support all the UEs with the above-mentioned possibilities. In addition, the equalization and detection blocks should also support different learned/considered constellations by different UEs.

In use, each UE k (such as the user devices 122, 124) sends a UE-specific bit vector $u_k$ which is passed through the legacy transmitter $f_{legacy,k}()$ modeling the channel encoder and interleaver block, then through a learnable transmitter $f_{map,k}$ (), to yield a signal which is then OFDM modulated and then predistorted by another learnable transmitter $f_{PA}$().

The resulting signal:

$$s_k(t) = f_{PA} (f_{OFDM} (f_{map,k}(f_{legacy,k}(u_k))))$$

is sent over the propagation channel 126 with response $h_k(t)$ to the receiver (the base station 128) which observes a signal:

$$y(t) = \sum_{k = 1:K}(h_k*s_k)(t).$$

The received signal is passed through the learnable generic channel estimator $r_{ce}$() which performs a user-agnostic channel estimation, additionally using channel covariance information A. Once the channel estimation is done by applying:

$$d(t) = r_{ce}(y(t), A),$$

a UE-specific equalization and detection follows, where the cancellation of all other UE streams is embedded. Thus, the second receive learnable block $r_{det}$() outputs $llr_k = r_{det}(d(t)$, constellation k, interferers-constellation 1:K \{k}).

Lastly, each UE's symbol log likelihood ratios (LLRs) are processed by the legacy outer receiver which computes a bit vector estimate per $\hat{u}_k$ each UE.

Example embodiments seek to learn the functions $f_{map,k}$ (),$r_{ce}$(),$r_{det}$() (and optionally or additionally $f_{PA}$ ()) so that:

• $r_{ce}$(),$r_{det}$() architectures are UE-agnostic, but use the UE-specific constellation (either learned or legacy); and/or
• $f_{map,k}$ () architecture is gNB-agnostic, but UE-specific.

To achieve the above goal, we may:

• Use as a loss function the binary cross-entropy (BCE) by comparing the detected $llr_k$ for UE k with $f_{legacy,k}(u_k)$ as the outputs of the channel encoder and interleaver blocks at UE k. Alternatively, mean squared error (MSE) can be considered as loss function for training or fine-tuning of a learnable block. For example, channel estimation block can be trained/fine-tuned using MSE loss function. To obtain labels for the MSE loss function, gNB may configure a dense pilot pattern for the UE to allow for label generation (true channel) at the receiver;
• Backpropagate the gradients via the backwards channel as discussed in detail above; and/or
• Constrain the UE-specific constellation to have no bias (zero mean over the constellation symbols), symmetry over x (real) or y (imag) axes, etc.

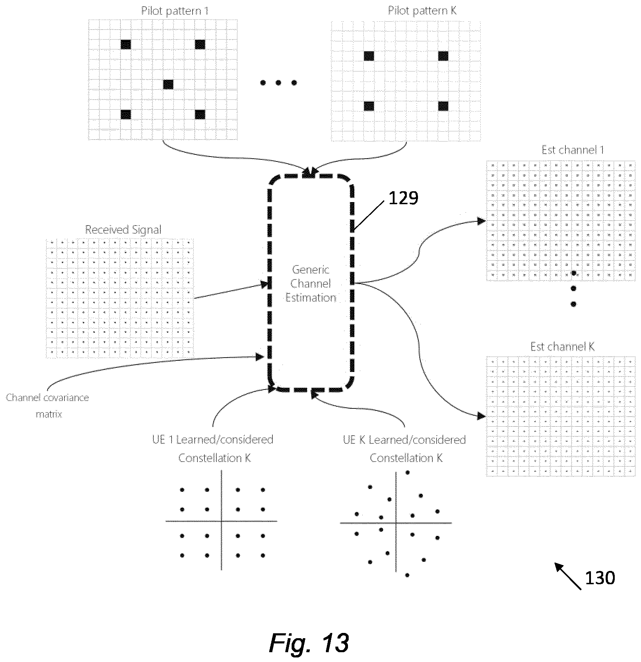

FIG. 13 is a block diagram showing a system, indicating generally by the reference numeral 130, including an example pilot scheme for the generic channel estimation module 129 of FIG. 12. In some example embodiments, information regarding pilot configurations (i.e. pilot schemes used by the generic channel estimator 129) may be shared between a UE and gNB pair. For example, a variable pilot configuration may be generated for use by the received for estimating respective channel response.

The use of channel estimation module 129 in the system 130 may combine:

• Using assistance information about:

  ○ The correlation of the channel in time, frequency and/or space domains, where such information is either conveyed in a compressed manner by the other side of the communication system or inferred locally.
  ○ The constellation of each served UE, where said constellation is either legacy or learned, and thus adaptive. In case of learned constellation, each UE informs the gNB, either periodically or on demand, about the most recent constellation adaptation.

• A progressive channel reconstruction approach described further below where the channel is learned by progressively expanding the RE neighborhood around the pilot resource elements (REs).

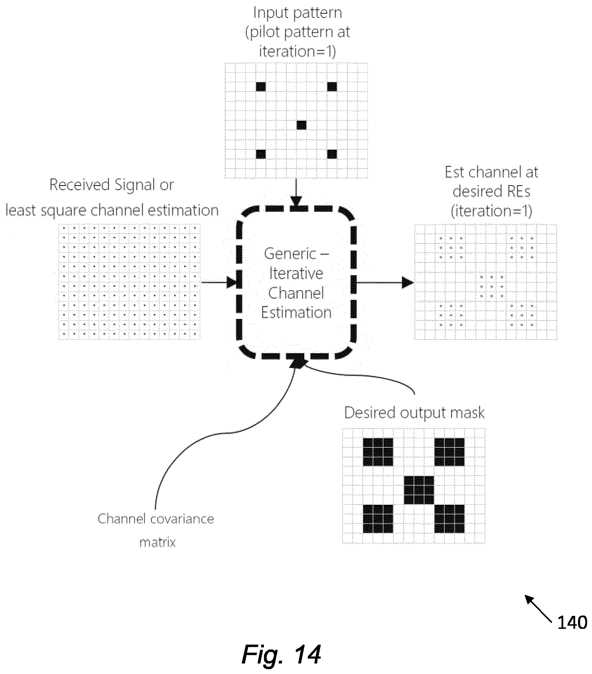

FIGS. 14 to 16 show the use of a generic channel estimate module for iterative channel estimation. Specifically, FIGS. 14 to 16 demonstrate the concept of progressive expanding the reconstruction neighbourhood during iterative channel estimation. This is achieved by iterative denoising and channel estimation for a user device using the assign pilot resource elements and gradually expanding the channel estimation to all resource elements.

In FIG. 14, the method (indicated generally by the reference numeral 140) uses the received signal and the pilot RE and estimates the channel response around the immediate neighboring pilot REs (i.e., the so-called one-step away neighbors - in this case, eight neighbors per pilot RE).

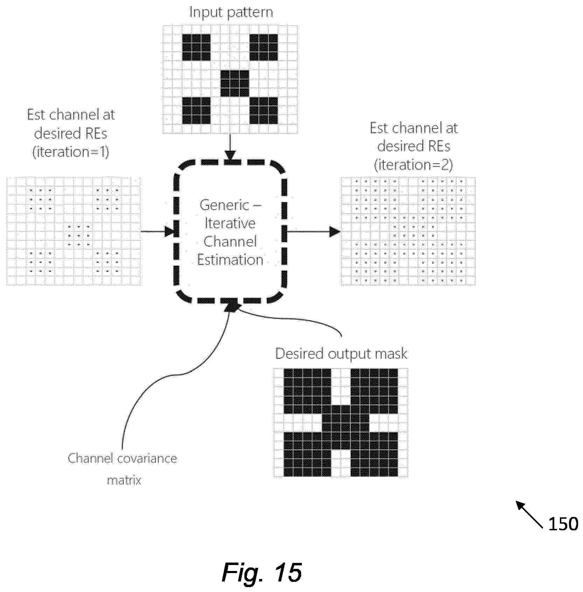

In FIG. 15, implemented in this example as a second iteration (indicated generally by the reference numeral 150), the pilot REs are now enhanced with the immediate neighbors (estimated in step a), and the enhanced pilot REs are now fed to the method. The output is then the channel response around the next immediate neighboring REs (neighbors of the enhanced pilot REs).

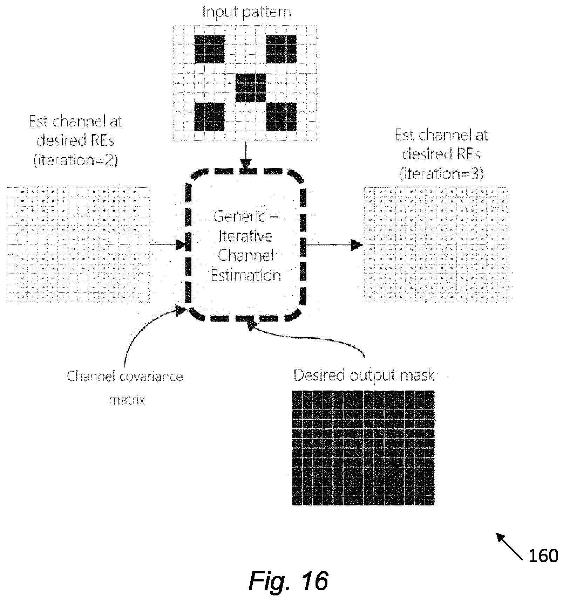

FIG. 16 shows how the neighborhood has been finally expanded to eventually include all Res (indicated generally by the reference numeral 160).

The procedure shown in FIGS. 14 to 16 enables learning of a generic channel estimation, as the input/output masks can be adapted to the pilot design for each UE. Note that in an alternative embodiment, the iterations may be implemented as layers of the same channel estimator, following the principles of deep unfolding architectures.

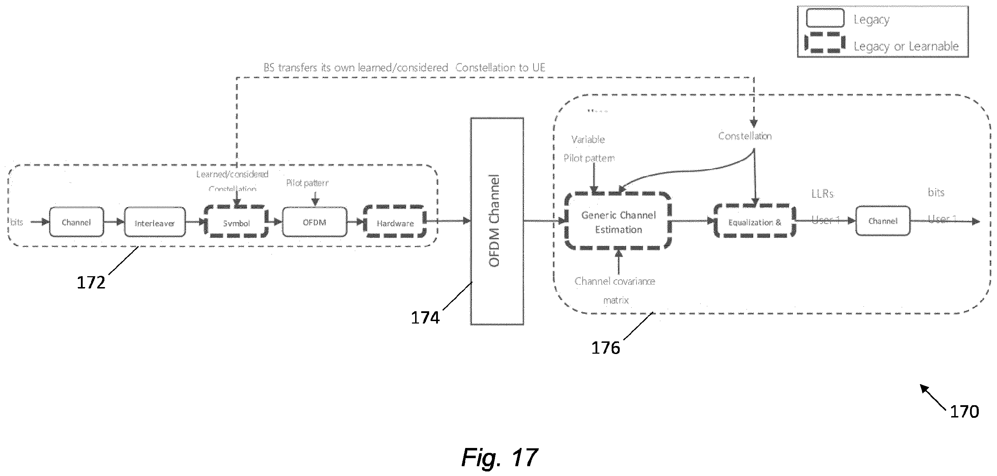

FIG. 17 is a block diagram of a system, indicated generally by the reference numeral 170, in accordance with an example embodiment. The system 170 shows a downlink (DL) arrangement in which signals are transmitter by a base station 172 to a user equipment (UE) 176 via a channel 174.

In the DL setup, the UE 176 is able to communication with different base stations (e.g. gNBs), where the learned or considered constellation by the base stations are likely different. In addition, base stations may consider pilotless schemes or different pilot patterns for serving the UE. Therefore, a generic channel estimation, equalization, and detection may be used for obtaining LLRs.

In the event that the UE 176 includes a trained equalization and detection block, in one example embodiment, separate trained equalizer and detection blocks may be considered. The equalizer may output the equalized received signals (instead of LLRs as in the examples described above to make the receiver agnostic to the considered/learned constellation by the transmitter(s). So, the constellation(s) are only fed to the detection block.

In an alternative embodiment lightweight modeling/formulation for covariance matrix is provided. In this embodiment, the channel covariance matrix A may be parameterized with few variables e.g., $\alpha, \beta, \gamma$, which eases the coordination on the channel properties between the UE and gNB.

A number of variants to the example embodiments described above may be provided.

For example, a proposed transceiver design may be purposely downgraded to a simpler architecture (for example, with a smaller number of trainable parameters). To cope with the subsequent but expected performance degradation, the design may be supported by an more frequency re-training. Such an arrangement may offer reduced computational complexity.

Moreover, to reduce the spectral overhead of sending training data over the air, the deep architectures above may be (re)trained by applying the on-the fly label generation. Thus, the training dataset may be augmented with real-time signals which have been processed by the UL receiver e.g., the received coded bits can be used as labels of the received signals, and the tuple can be seen as a new training data sample. Such data sets may be sufficiently accurate for training purposes, particularly if the detection of transmitted data is good.

In another alternative embodiment, to ease the label at the receiver end, a TX (gNB or UE, depending on the circumstances) may use a pseudo-random bit generator. If the UE and gNB are co-ordinated, both sides can used the same pseudo-random bit generator using the same initial seed. Note that additional signalling may be required in an alignment phase to implement this arrangement.

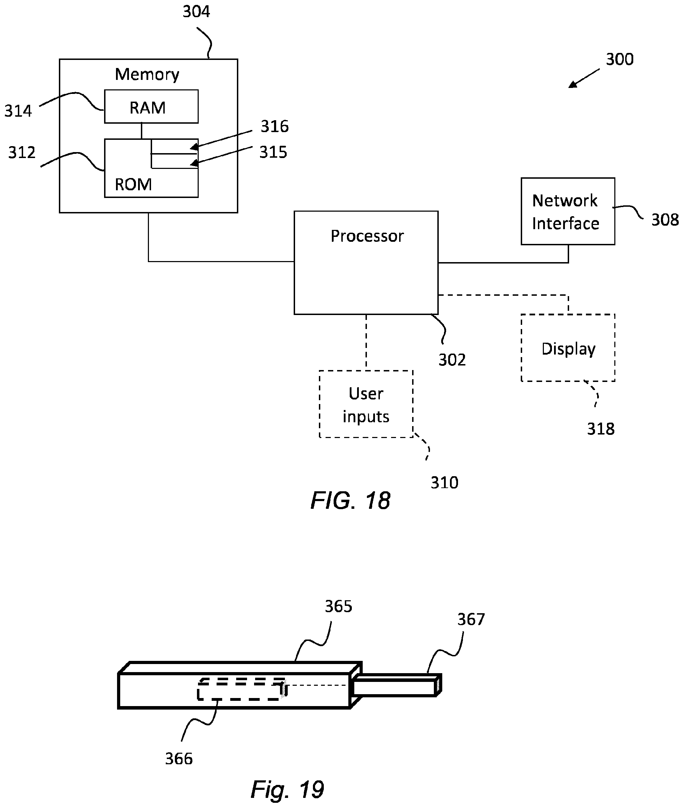

For completeness, FIG. 18 is a schematic diagram of components of one or more of the example embodiments described previously, which hereafter are referred to generically as a processing system 300. The processing system 300 may, for example, be the apparatus referred to in the claims below.

The processing system 300 may have a processor 302, a memory 304 closely coupled to the processor and comprised of a RAM 314 and a ROM 312, and, optionally, a user input 310 and a display 318. The processing system 300 may comprise one or more network/apparatus interfaces 308 for connection to a network/apparatus, e.g. a modem which may be wired or wireless. The network/apparatus interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms and message sequences 60, 70, 80, 90, 100 and 110 described above. Note that in the case of small device/apparatus the memory can be most suitable for small size usage i.e. not always a hard disk drive (HDD) or a solid state drive (SSD) is used.

The processor 302 may take any suitable form. For Instance, It may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size.

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

FIG. 19 shows a tangible media, in the form of a removable memory unit 365, storing computer-readable code which when run by a computer may perform methods according to example embodiments described above. The removable memory unit 365 may be a memory stick, e.g. a USB memory stick, having internal memory 366 storing the computer-readable code. The internal memory 366 may be accessed by a computer system via a connector 367. Of course, other forms of tangible storage media may be used, as will be readily apparent to those of ordinary skilled in the art. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams and sequences of Figures 6 to 11 are examples only and that various operations depicted therein may be omitted, reordered and/or combined.

It will be appreciated that the above-described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. A device for transmitting signals to a node of a mobile communication system, the device comprising one or more non-trainable transmitter modules and one or more trainable transmitter modules, wherein said one or more trainable transmitter modules comprise a trainable modulator configured to generate complex symbols from a learned constellation.

2. A device as claimed in claim 1, wherein the one or more trainable transmitter modules comprise a trainable pre-distorter.

3. A device as claimed in claim 1 or claim 2, further comprising:
   means for providing a capability report to the node in response to a request from said node, said capability report including at least one of characteristics or constraints of one or more of said trainable transmitter modules.

4. A device as claimed in any one of claims 1 to 3, further comprising:
   means for receiving backpropagation gradients from the node for use in training one or more of said trainable modules.

5. A device as claimed in claim 4, further comprising:

   means for updating the constellation of the trainable modulator based, at least in part, on said backpropagation gradients; and
   means for forward propagating an updated learned constellation to said node.

6. A device as claimed in any one of the preceding claims, further comprising:

> means for updating one or more of said trainable transmitter modules; and
> means for sharing a device dataset describing functionality of one or more of said updated trainable transmitter modules to said node.

7. A device as claimed in any one of the preceding claims, further comprising:
means for receiving a node dataset describing functionality of one or more updated trainable receiver modules of said node.

8. A device as claimed in any one of the preceding claims, further comprising at least one of:

> means for providing an updated constellation to the node during an inference mode of operation; or
> means for receiving channel correlation information from the node during the inference mode of operation.

9. A device as claimed in any one of the preceding claims, further comprising:
means for receiving a pilot configuration from said node.

10. A node for receiving signals from each of a plurality of devices of a mobile communication system, the node comprising one or more non-trainable receiver modules and one or more trainable receiver modules, wherein the one or more trainable receiver modules comprise at least one of:

> means for estimating a channel response for transmissions from each respective device and said node; or
> means for detecting encoded data symbols received from one or more of said devices over the channel based, at least in part, on device-specific constellation information and device-specific channel information.

11. A node as claimed in claim 10, wherein at least some of said plurality of devices providing the signals received as said node include a trainable modulator configured to generate complex symbols from a learned constellation.

12. A node as claimed in claim 10 or claim 11, wherein said one or more trainable receiver modules comprise a single module for estimating said channel response and for detecting said encoded data symbols.

13. A node as claimed in any one of claims 10 to 12, wherein the means for estimating said channel response comprises a trainable generic channel estimation module.

14. A node as claimed in any one of claims 10 to 13, further comprising:
means for defining a variable pilot configuration for transmission by each device for use by said means for estimating the respective channel responses.

15. A node as claimed in any one of claims 10 to 14, further comprising:
means for defining constraints for training one or more trainable modules of one or more of said devices.

16. A node as claimed in any one of claims 10 to 15, further comprising:
means for receiving a capability report from one or more of said devices in response to a request from said node, wherein each capability report includes at least one of characteristics or constraints of trainable transmitter modules of the respective device.

17. A node as claimed in claim 16, further comprising:
means for providing backpropagation gradients to one or more of said devices for use in training trainable modules of the respective device(s).

18. A node as claimed in claim 16 or claim 17, further comprising:
means for receiving an updated constellation from one or more of said devices.

19. A node as claimed in any one of claims 10 to 18, further comprising:
means for defining an update rate for updating a constellation of a trainable modulator of one or more of said devices.

20. A node as claimed in any one of claims 10 to 19, further comprising:
means for receiving, from one or more of said devices, a device dataset describing functionality of one or more updated trainable transmitter modules of the respective device.

21. A method comprising:
transmitting signals to a node of a mobile communication system using a device having one or more non-trainable transmitter modules and one or more trainable transmitter modules, wherein said one or more trainable transmitter modules comprise a trainable modulator configured to generate complex symbols from a learned constellation.

22. A method comprising:
receiving, at a node of a mobile communication system, signals from each of a plurality of devices of the mobile communication system, the node comprising one or more non-trainable receiver modules and one or more trainable receiver modules, wherein the one or more trainable receiver modules are configured to: estimate a channel response for transmissions from each respective device and said node; and/or detect encoded data symbols received from one or more of said devices over the channel based, at least in part, on device-specific constellation information and device-specific channel information.

*Fig. 1*

*Fig. 2*

Fig. 3

Fig. 4

*Fig. 5*

**Fig. 6**

71

72

**UE k**

**gNB**

Request/Report learnable

TX capability report incl.
type and size if IN/OUT
channel correlation
etc.

73

Configure UE for training

74

and enable either the trainable TX
or the legacy TX

75

Configure bit vector,

training strategy, etc.
Trigger training

Training

Applies mixed TX to
the bit vector

76

UE-specific partly learned signal

78

including most up-to-date

77

learned TX constellation

Applies mixed RX
Computes loss function
gradients

79

DL PDSCH

Backpropagation and other assistance data
e.g. channel covariance info

70

*Fig. 7*

Setup
82

Train UE
84

Share info
86

Train gNB
88

80

*Fig. 8*

Setup
92

Train gNB
94

Share info
96

Train UE
98

90

*Fig. 9*

Fig. 10

Fig. 11

*Fig. 12*

Pilot pattern 1

Pilot pattern K

• • •

Est channel 1

129

Received Signal

Generic
Channel
Estimation

Channel covariance
matrix

UE 1 Learned/considered
Constellation K

UE K Learned/considered
Constellation K

Est channel K

130

*Fig. 13*

Input pattern
(pilot pattern at
iteration=1)

Received Signal or
least square channel estimation

Est channel at
desired REs
(iteration=1)

Generic –
Iterative
Channel
Estimation

Desired output mask

Channel covariance
matrix

140

*Fig. 14*

Fig. 15

Input pattern

Est channel at
desired REs
(iteration=2)

Est channel at
desired REs
(iteration=3)

Generic –
Iterative
Channel
Estimation

Channel covariance
matrix

Desired output mask

160

*Fig. 16*

Fig. 17

*FIG. 18*

*Fig. 19*